(19) Europäisches Patentamt
European Patent Office
Office européen des brevets

(11) **EP 2 005 028 B1**

(12) **EUROPÄISCHE PATENTSCHRIFT**

(45) Veröffentlichungstag und Bekanntmachung des Hinweises auf die Patenterteilung:
**05.10.2011 Patentblatt 2011/40**

(51) Int Cl.:
***F16H 7/12*** *(2006.01)*   ***F16H 7/08*** *(2006.01)*

(21) Anmeldenummer: **07712216.6**

(22) Anmeldetag: **14.02.2007**

(86) Internationale Anmeldenummer:
**PCT/EP2007/051443**

(87) Internationale Veröffentlichungsnummer:
**WO 2007/113039 (11.10.2007 Gazette 2007/41)**

(54) **SPANNVORRICHTUNG EINES ZUGMITTELTRIEBS**

TENSIONING DEVICE OF A TRACTION MECHANISM DRIVE

DISPOSITIF DE SERRAGE POUR UNE COMMANDE PAR MOYEN DE TRACTION

(84) Benannte Vertragsstaaten:
**DE FR GB IT**

(30) Priorität: **31.03.2006 DE 102006014942**

(43) Veröffentlichungstag der Anmeldung:
**24.12.2008 Patentblatt 2008/52**

(73) Patentinhaber: **Schaeffler Technologies GmbH & Co. KG**
**91074 Herzogenaurach (DE)**

(72) Erfinder: **SINGER, Johann**
**91091 Grossenseebach (DE)**

(56) Entgegenhaltungen:
**EP-A- 0 575 662     EP-A1- 0 780 597**
**WO-A-01/51828      GB-A- 2 328 728**
**US-A1- 2003 216 204**

## Beschreibung

Gebiet der Erfindung

Die Erfindung betrifft eine Spannvorrichtung eines Zugmitteltriebs, mit einem über ein Schwenklager drehbar an einem Basisgehäuse gelagerten und radial beabstandet von der Drehachse des Schwenklagers mit einer drehbaren Spannrolle versehenen Spannhebel, der mittels einer als Schraubenfeder ausgebildeten, koaxial zu dem Schwenklager angeordneten und an beiden Federenden gehäuseseitig mit dem Basisgehäuse sowie hebelseitig mit dem Spannhebel in Verbindung stehenden Torsionsfeder mit einem Torsionsmoment um die Drehachse des Schwenklagers beaufschlagbar ist, wobei das Schwenklager einen Lagerbolzen, eine Lagernabe und mindestens eine zwischen dem Lagerbolzen und der Lagernabe angeordnete Gleitlagerbuchse umfasst, und wobei eine mittlere radiale Kraftangriffsebene der Spannrolle zu einer mittleren radialen Lagerebene des Schwenklagers meist axial beabstandet ist.

Hintergrund der Erfindung

Spannvorrichtungen der vorbezeichneten Bauart kommen in unterschiedlichen Ausführungen bevor-zugt bei Nebenaggregatezügen von Verbrennungsmo-toren zur Anwendung. Derartige Spannvorrichtungen sind sowohl in einer innen gelagerten Ausführung mit einer Lagerung des starr mit dem Spannhebel verbundenen Lagerbolzens in der einen Bestandteil des Basisgehäuses bildenden Lagernabe als auch in einer außengelagerten Ausführung mit einer Lagerung der starr mit dem Spannhebel verbundenen Lagernabe auf dem einen Bestandteil des Basisgehäuses bildenden Lagerbolzen bekannt, wobei das Basisgehäuse jeweils zur Befestigung der betreffenden Spannvorrichtung an einem Motorgehäuse, wie z.B. dem Kurbelgehäuse oder dem Steuergehäuse eines Verbrennungskolbenmotors, vorgesehen ist.

Hinsichtlich der Anordnung der Spannrolle kann bei einer derartigen Spannvorrichtung zusätzlich zwischen einer so genannten Offset- oder Z-Ausführung, bei der die Spannrolle axial auf der von dem Basisgehäuse abgewandten Außenseite des Spannhebels angeordnet ist, und einer so genannten Inline-Ausführung oder U-Ausführung, bei der die Spannrolle radial seitlich des Basisgehäuses axial auf der dem Basisgehäuse zugewandten Innenseite des Spannhebels angeordnet ist, unterschieden werden.

Die radiale Lagerung des Spannhebels in oder auf dem Basisgehäuse ist über mindestens eine Gleitlagerbuchse realisiert, die zwischen der Lagernabe und dem Lagerbolzen angeordnet ist und zumeist aus einem widerstandsfähigen sowie zugleich reibungsarmen Kunststoffmaterial besteht. Auf die Lagerbuchse wirkt eine resultierende Radialkraft, die sich aus der auf den Spannhebel wirksamen Federkraft der Torsionsfeder und der von dem Zugmittel über die Spannrolle auf den Spannhebel ausgeübten Reaktionskraft ergibt. Da aber mindestens eine der Radialebenen, in der die Federkraft der Torsionsfeder und die Reaktionskraft des Zugmittels auf den Spannhebel einwirken, zumeist axial beabstandet zu einer mittleren radialen Lagerebene des Schwenklagers bzw. der Gleitlagerbuchse liegen, ergibt sich zwangsläufig ein resultierendes Kippmoment um eine Kippachse, die senkrecht zu der Drehachse des Schwenklagers in der mittleren Lagerebene liegt. Dieses Kippmoment bewirkt nachteilig eine ungleichmäßige, also axial endseitig diagonal gegenüberliegend wirksame, einseitige Belastung des Schwenklagers mit einer hohen lokalen Druck- und Kantenbelastung der Gleitlagerbuchse, die zu ungleichmäßigem Verschleiß der Gleitlagerbuchse und demzufolge zu unerwünschten Fluchtungsfehlern des Spannhebels sowie der an diesem befestigten Spannrolle bezüglich des Zugmittels führt.

Um diese bekannten Nachteile zu vermeiden, sind verschiedene Lösungen zur Vermeidung eines derartigen Kippmomentes vorgeschlagen worden.

So ist in der DE 42 20 879 A1 eine Spannvorrichtung mit einem außengelagerten Spannhebel beschrieben, der über eine Torsionsfeder, die als eine im schließenden Sinn belastbare Schraubenfeder mit endseitigen Federschenkeln ausgebildet ist, gegenüber dem Basisgehäuse mit einem Torsionsmoment um die Drehachse des Schwenklagers belastbar ist. An der hebelseitigen äußeren Windung steht die Schraubenfeder mit einem Gleitschuh in Verbindung, der in einer zu einer resultierenden Reaktionskraft eines Zugmittels auf die Spannrolle parallelen Winkelposition bezüglich der Drehachse des Schwenklagers radialbeweglich in einer Radialführung eines inneren Zylindersteges des Spannhebels geführt ist, und durch eine radiale Federkraft mit einer inneren Reibfläche an die zylindrische Außenwand eines mit dem Basisgehäuse verbundenen inneren Zylindersteges gedrückt wird, der koaxial innerhalb des inneren Zylindersteges des Spannhebels angeordnet ist.

Die radiale Federkraft und damit das über die Reibfläche des Gleitschuhs zwischen dem Spannhebel und dem Basisgehäuse wirksame Reibmoment, durch das eine Schwenkbewegung des Spannhebels gedämpft wird, verhalten sich weitgehend proportional zu dem Torsionsmoment der Schraubenfeder. Des Weiteren gleicht die radiale Federkraft über ihren axialen Abstand zu einer mittleren radialen Lagerebene des Schwenklagers das Kippmoment .der resultierenden Reaktionskraft des Zugmittels auf die Spannrolle um eine gedachte, in der mittleren Lagerebene des Schwenklagers liegende Kippachse aus.

Aufgrund des relativ kleinen Radius der mit dem Gleitschuh in Reibkontakt stehenden äußeren Zylinderwand des Basisgehäuses ist das durch die radiale Federkraft erzeugte Reibmoment vergleichsweise klein, bzw. die radiale Federkraft muss relativ groß sein, um ein hinreichend großes Reibmoment zu erzeugen. Des Weiteren ist die radiale Federkraft für einen exakten Ausgleich des Kippmomentes der resultierenden Reaktionskraft des Zugmittels um die Kippachse nur schwer justierbar. Zudem weist die bekannte Spannvorrichtung im Bereich des Basisgehäuses aufgrund der beiden erforderlichen Zylinderstege große radiale Abmessungen auf, welche die Anordnung dieser Spannvorrichtung in einem Zugmitteltrieb erschweren.

Eine andere Spannvorrichtung mit einem außengelagerten Spannhebel ist aus der EP 0 780 597 B1 bekannt, bei welcher der Spannhebel über eine Torsionsfeder, die als eine im schließenden Sinn belastbare Schraubenfeder mit endseitigen Federschenkeln ausgebildet ist, gegenüber dem Basisgehäuse mit einem Torsionsmoment um die Drehachse des Schwenklagers belastbar ist. An dem gehäuseseitigen Federende steht die Schraubenfeder mit dem nach innen abgewinkelten Federschenkel über eine Rampenfläche mit einem Gleitschuh in Verbindung, der in einer zu einer resultierenden Reaktionskraft eines Zugmittels auf die Spannrolle parallelen Winkelposition bezüglich der Drehachse des Schwenklagers gehalten ist, und durch eine Radialkomponente der wirksamen Federkraft mit einer äußeren Reibfläche an die zylindrische Innenwand eines mit dem Spannhebel verbundenen äußeren Zylindersteges gedrückt wird.

Die Radialkomponente der Federkraft und damit das über die Reibfläche des Gleitschuhs zwischen dem Spannhebel und dem Basisgehäuse wirksame Reibmoment, durch das eine Schwenkbewegung des Spannhebels gedämpft wird, verhalten sich weitgehend proportional zu dem Torsionsmoment der Schraubenfeder.

Des Weiteren gleicht die Radialkomponente der Federkraft über ihren axialen Abstand zu einer mittleren radialen Lagerebene des Schwenklagers das Kippmoment der resultierenden Reaktionskraft des Zugmittels auf die Spannrolle um eine gedachte, in der mittleren Lagerebene des Schwenklagers liegende Kippachse aus.

Aufgrund der ungünstigen Hebelverhältnisse zwischen dem Federschenkel und dem Gleitschuh ist das durch die Radialkomponente der Federkraft erzeugte Reibmoment vergleichsweise klein, bzw. die Federkraft muss relativ groß sein, um ein hinreichend großes Reibmoment zu erzeugen. Außerdem ist die Radialkomponente der Federkraft für einen exakten Ausgleich des Kippmomentes der resultierenden Reaktionskraft des Zugmittels um die Kippachse nur schwer justierbar. Zudem ist der Fertigungs- und Montageaufwand aufgrund des komplizierten Aufbaus der Gleitschuhanordnung relativ hoch. Des Weiteren erfordert ein derartiger Federtyp einen nachteiligen größeren Bauraum.

Eine Spannvorrichtung mit einer zu der vorgenannten Spannvorrichtung ähnlichen Gleitschuhanordnung ist in der DE 601 05 759 T2 beschrieben. Im Unterschied zu der Ausführung nach der EP 0 780 597 B1 ist in der Ausführung nach der DE 601 05 759 T2 der Spannhebel innen gelagert und der Gleitschuh hebelseitig angeordnet, wobei der Gleitschuh aus einer mit einer äußeren Reibfläche oder mit einem Reibbelag versehenen Dämpfungsplatte gebildet wird. Die Schraubenfeder steht an dem hebelseitigen Federende mit einem nach innen abgewinkelten Federschenkel über zwei Kontaktpunkte mit der Dämpfungsplatte in Verbindung, deren Reibfläche in einer zu einer resultierenden Reaktionskraft eines Zugmittels auf die Spannrolle parallelen Winkelposition bezüglich der Drehachse des Schwenklagers angeordnet ist, und durch eine Radialkomponente der wirksamen Federkraft an die zylindrische Innenwand eines mit dem Basisgehäuse verbundenen äußeren Zylindersteges gedrückt wird. Aus der WO-A1-0151828 ist eine Spannvorrichtung gemäß dem Oberbegriff des Anspruchs 1 bekannt.

Aufgabe der Erfindung

Vor diesem Hintergrund liegt der Erfindung die Aufgabe zugrunde, eine Spannvorrichtung der eingangs genannten Art anzugeben, die bei einem einfachen und bauraumoptimierten Aufbau eine verbesserte Justierbarkeit, eine proportional zum Spannelement wirkende, größere Reibungsdämpfung, sowie eine gleichmäßig ausgelastete Gleitlagerung aufweist.

Zusammenfassung der Erfindung

Der Erfindung liegt die Erkenntnis zugrunde, dass die Erzeugung eines relativ großen Reibmomentes zur Reibungsdämpfung einer Schwenkbewegung des Spannhebels sowie eine genauere Justierung eines ein Kippmoment der resultierenden Reaktionskraft des Zugmittels bezüglich des Schwenklagers ausgleichenden Kippmomentes durch eine unmittelbare, also umlenk- und übersetzungsfreie Nutzung einer endseitigen Federkraft der als Schraubenfeder ausgebildeten Torsionsfeder, in Verbindung mit einem einfachen und Platz sparenden Aufbau, effektiver als bislang bekannt realisierbar ist.

Die gestellte Aufgabe ist gemäß den Merkmalen des Hauptanspruchs gelöst durch eine Spannvorrichtung eines Zugmitteltriebs, mit einem über ein Schwenklager drehbar an einem Basisgehäuse gelagerten und radial beabstandet von der Drehachse des Schwenklagers mit einer drehbaren Spannrolle versehenen Spannhebel, welcher mittels einer als Schraubenfeder ausgebildeten, koaxial zu dem Schwenklager angeordneten und an beiden Federenden gehäuseseitig mit dem Basisgehäuse sowie hebelseitig mit dem Spannhebel in Verbindung stehenden Torsionsfeder mit einem Torsionsmoment $M_T$ um die Drehachse des Schwenklagers beaufschlagbar ist. Dabei umfasst das Schwenklager einen Lagerbolzen, eine Lagernabe sowie mindestens eine zwischen dem Lagerbolzen und der Lagernabe angeordnete Gleitlagerbuchse, wobei eine mittlere radiale Kraftangriffsebene der Spannrolle zu einer mittleren radialen Lagerebene des Schwenklagers meist axial beabstandet ist.

Außerdem ist bei dieser Spannvorrichtung vorgesehen, dass die Torsionsfeder als eine im öffnenden Sinn belastbare schenkellose Schraubenfeder mit stumpfen Federenden ausgebildet ist, deren hebelseitiges Federende an einer axial-radial ausgerichteten Anschlagfläche eines mit dem Spannhebel verbundenen Mitnehmers anliegt, wobei der Mitnehmer bezüglich der Drehachse des Schwenklagers umfangsseitig derart angeordnet ist, dass die Anschlagfläche normal, also senkrecht zu einer resultierenden Reaktionskraft $F_{Z\_R}$ eines Zugmittels auf die Spannrolle ausgerichtet ist, wobei die Abstützung einer Reaktionskraft $F_{F\_R}$ des Spannhebels auf die Schraubenfeder gegenüber dem Basisgehäuse erfolgt, und wobei die Mitte des hebelseitigen Federendes zu der mittleren Lagerebene des Schwenklagers axial derart beabstandet ist, dass sich die Kippmomente $M_K$ einer über die Anschlagfläche auf den Spannhebel wirksamen tangentialen Federkraft $F_{F\_T}$ der Schraubenfeder und der über die Spannrolle auf den Spannhebel wirksamen resultierenden Reaktionskraft $F_{Z\_R}$ des Zugmittels um eine gedachte, senkrecht zu der Federkraft $F_{F\_T}$ und der Reaktionskraft $F_{Z\_R}$ die Drehachse des Schwenklagers in der mittleren Lagerebene senkrecht kreuzende Kippachse gegenseitig aufheben.

Durch die Verwendung der schenkellosen Schraubenfeder wird das Torsionsmoment der Torsionsfeder jeweils als tangentiale Federkraft über die stumpfen Federenden in den Spannhebel und das Basisgehäuse eingeleitet. Hierdurch ergibt sich zum einen ein relativ einfacher und Platz sparender Aufbau der Spannvorrichtung. Da die Einleitung der Federkräfte über die stumpfen Federenden geometrisch exakt festliegt, ist zum anderen ein durch die Federkraft erzeugbares Reibmoment um die Drehachse des Schwenklagers und ein durch die Federkraft erzeugbares ausgleichendes Kippmoment um die Kippachse des Schwenklagers durch eine Variation des Durchmessers, der Höhe und der Federsteifigkeit der Schraubenfeder ohne großen Aufwand sehr genau justierbar.

Vorteilhafte Ausgestaltungen und Weiterbildungen dieser erfindungsgemäßen Spannvorrichtung sind in den Ansprüchen 2 bis 11 angegeben.

Durch die hebelseitige Federkraft, die über den Mitnehmer in den Spannhebel eingeleitet wird, wird zum einen das über die Spannrolle auf das zugeordnete

Zugmittel wirksame Spannmoment um die Drehachse des Schwenklagers erzeugt, dem die resultierende Reaktionskraft des Zugmittels das Gleichgewicht hält. Zum anderen wird über die hebelseitige Federkraft über ihren axialen Abstand zu der Kippachse des Schwenklagers ein Kippmoment erzeugt, das dem Kippmoment der resultierenden Reaktionskraft des Zugmittels das Gleichgewicht hält.

Hierzu ist der Mitnehmer bei einer bezüglich der mittleren Lagerebene des Schwenklagers axial gegenüberliegenden Anordnung der mittleren Kraftangriffsebene der Spannrolle und der Mitte des hebelseitigen Federendes der Schraubenfeder in einem von der Spannrolle radial abgewandten Sektor des Spannhebels angeordnet, und bei einer bezüglich der mittleren Lagerebene des Schwenklagers axial gleichseitigen Anordnung der mittleren Kraftangriffsebene der Spannrolle und der Mitte des hebelseitigen Federendes der Schraubenfeder in einem der Spannrolle radial zugewandten Sektor des Spannhebels angeordnet.

Die Reibungsdämpfung der Spannvorrichtung ist vorteilhaft dadurch realisiert, dass die hebelseitige Abstützung der Reaktionskraft des Spannhebels auf die Schraubenfeder über einen Gleitschuh erfolgt, der um die Drehachse des Schwenklagers bezüglich der äußeren hebelseitigen Windung der Schraubenfeder von der Anschlagfläche des Mitnehmers aus um etwa 90° zurückversetzt angeordnet ist, radial innen an der äußeren hebelseitigen Windung der Schraubenfeder anliegt, in einer Radialführung des Spannhebels radialbeweglich geführt ist, und radial außen mit einer Reibungsfläche an einer zylindrischen Innenwand des Basisgehäuses anliegt.

Hierdurch wird erreicht, dass die vollständige Federkraft als radiale Anpresskraft des Gleitschuhs zur Erzeugung eines Reibmomentes zur Reibungsdämpfung einer Schwenkbewegung des Spannhebels genutzt wird, ohne das Momentengleichgewicht der auf den Spannhebel wirksamen Kräfte bezüglich der Drehachse und der Kippachse des Schwenklagers zu beeinflussen.

Zwischen der äußeren hebelseitigen Windung der Schraubenfeder und dem Spannhebel ist zweckmäßig ein vorzugsweise geschlitzter Lagerring angeordnet, der gegenüber dem Spannhebel formschlüssig gegen ein Verdrehen gesichert ist und aus einem widerstandsfähigen sowie reibungsarmen Kunststoff besteht. Durch die Verwendung des Lagerrings wird durch eine gleitbewegliche Lagerung der äußeren Windung eine radial weitgehend freie Beweglichkeit der Schraubenfeder erzielt, so dass die durch die hebelseitige Federkraft erzeugten Kräfte und Momente weitgehend ohne Reibungseinflüsse sind und somit weitgehend den theoretischen Werten entsprechen. Zudem ist durch die Verwendung von Lagerringen unterschiedlicher Dicke die Möglichkeit für eine einfache Justierung des durch die hebelseitige Federkraft erzeugten ausgleichenden Kippmomentes um die Kippachse des Schwenklagers sowie eine zusätzliche Stabilisierung der Feder bzw. des Hebels gegeben.

Zur weiteren Erhöhung der radialen Beweglichkeit kann der Lagerring auch über seinen Umfang verteilt federseitig angeordnete axiale Erhebungen aufweisen, durch welche die äußere hebelseitige Windung der Schraubenfeder punktförmig axial abgestützt wird.

Bei ausreichender Flexibilität des Lagerrings und bei Verwendung eines entsprechenden Werkstoffes kann sogar der Gleitschuh in den Lagerring integriert sein, also der Gleitschuh einstückig mit dem Lagerring verbunden sein, wogegen der Gleitschuh sonst ein separates Bauteil bildet.

Der Mitnehmer kann einstückig mit dem Spannhebel verbunden sein. Dies erfordert jedoch für unterschiedliche Applikationen mit verschiedenen Winkellagen des Mitnehmers und/oder mit rechts- oder linksdrehendem Torsionsmoment unterschiedliche Spannhebel. Es ist daher besonders vorteilhaft, wenn der Mitnehmer in den Lagerring integriert ist, also einstückig mit dem Lagerring verbunden ist, da dann für unterschiedliche Applikationen jeweils derselbe Spannhebel mit unterschiedlichen Lagerringen verwendet werden kann.

Aufgrund des vorliegenden Aufbaus der Spannvorrichtung kann die Schraubenfeder abweichend von der bevorzugt verwendeten zylindrischen Bauform auch kegelförmig ausgebildet sein. So kann die Schraubenfeder z.B. gehäuseseitig verjüngt sein, um unter beengten Einbauverhältnissen durch eine Reduzierung des dortigen Durchmessers des Basisgehäuses Bauraum einzusparen.

Sollte der Ausgleich des Kippmomentes der resultierenden Reaktionskraft des Zugmittels über die hebelseitige Federkraft in der beschriebenen Weise alleine nicht zu bewerkstelligen sein, so kann der diesbezügliche Momentenausgleich durch die Verwendung eines zusätzlichen zweiten Gleitschuhs erzielt werden, der an der äußeren gehäuseseitigen Windung der Schraubenfeder mit Wirkung auf den Spannhebel angeordnet ist.

Hierzu ist zweckmäßig vorgesehen, dass das gehäuseseitige Federende der Schraubenfeder an einer bezüglich der Drehachse des Schwenklagers axial-radial ausgerichteten Anschlagfläche eines mit dem Basisgehäuse verbundenen Mitnehmers anliegt, wobei der Mitnehmer umfangsseitig derart angeordnet ist, dass die Anschlagfläche normal, also zu der mittleren resultierenden Reaktionskraft des Zugmittels auf die Spannrolle ausgerichtet ist, und dass eine hebelseitige Abstützung der Reaktionskraft des Basisgehäuses auf die Schraubenfeder über den zweiten Gleitschuh erfolgt, der um die Drehachse des Schwenklagers bezüglich der äußeren gehäuseseitigen Windung der Schraubenfeder von der Anschlagfläche des Mitnehmers aus um etwa 90° zurückversetzt angeordnet ist, radial innen an der äußeren gehäuseseitigen Windung der Schraubenfeder anliegt, in einer Radialführung des Basisgehäuses radialbeweglich geführt ist und radial außen mit einer Reibungsfläche an einer zylindrischen Innenwand des Spannhebels anliegt, wobei die Mitte der Reibfläche des Gleitschuhs axial derart zu der mittleren Lagerebene des Schwenklagers beabstandet ist, dass sich die Kippmomente der über die Spannrolle auf den Spannhebel wirksamen resultierenden Reaktionskraft des Zugmittels, der hebelseitig über die dortige Anschlagfläche auf den Spannhebel wirksamen Federkraft der Schraubenfeder und der gehäuseseitig über den zweiten Gleitschuh in den Spannhebel eingeleiteten radialen Anpresskraft um die Kippachse gegenseitig aufheben.

Dieses Spannsystem mit Doppeldämpfung ist vorrangig an Langarm/Inline-Spanneinheiten anzuwenden, wobei Spannrollenmitte und Lagermitte auch in einer Ebene liegen können.

Kurze Beschreibung der Zeichnungen

Die Erfindung wird nachfolgend anhand der beiliegenden Zeichnung an einigen Ausführungsformen näher erläutert. Darin zeigt

Fig. 1 eine bevorzugte Ausführung einer erfindungsgemäßen Spannvorrich- tung in einem Längsmittelschnitt,

Fig. 2a eine schematische Axialansicht einer Spannvorrichtung gemäß Fig. 1 zur Verdeutlichung der Hebelverhältnisse,

Fig. 2b eine schematische radiale Seitenansicht der Spannvorrichtung nach Fig. 2a,

Fig. 2c eine schematische Axialansicht der Spannvorrichtung nach Fig. 2a mit geänderten Kraftrichtungen,

Fig. 3 eine Spannvorrichtung gemäß Fig. 1 bis Fig. 2c in einer Explosionsdar- stellung der wichtigsten Bauteile,

Fig. 4 den Spannhebel einer Spannvorrichtung gemäß Fig. 1 bis Fig. 3 in einer Perspektivansicht,

Fig.5a eine weitergebildete Ausführungsform einer erfindungsgemäßen Spannvorrichtung in einem Längsmittelschnitt,

Fig. 5b eine vereinfachte axiale Schnittansicht der Spannvorrichtung nach Fig. 5a gemäß Schnitt Vb - Vb, und

Fig. 5c eine vereinfachte axiale Schnittansicht der Spannvorrichtung nach Fig. 5a gemäß Schnitt Vc - Vc.

Detaillierte Beschreibung der Zeichnungen

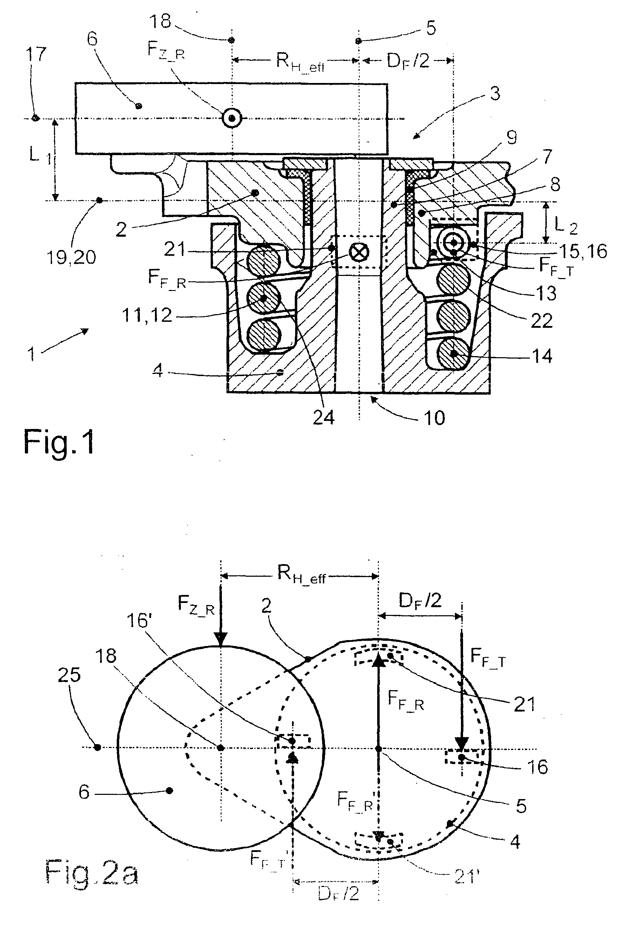

Eine bevorzugte Ausführungsform einer erfindungsgemäßen Spannvorrichtung 1 eines Zugmitteltriebs ist in Fig. 1 in einem Längsmittelschnitt dargestellt. In einer so genannten Offset- oder Z-Anordnung ist ein Spannhebel 2 über ein Schwenklager 3 drehbar an einem Basisgehäuse 4 gelagert, und radial beabstandet von der Drehachse 5 des Schwenklagers 3 mit einer drehbaren Spannrolle 6 versehen. Das Schwenklager 3 ist aus einem Lagerbolzen 7, einer Lagernabe 8 und einer zwischen dem Lagerbolzen 7 und der Lagernabe 8 angeordneten Gleitlagerbuchse 9 gebildet, wobei vorliegend der Lagerbolzen 7 starr mit dem Basisgehäuse 4 verbunden ist, und die Lagernabe 8 Bestandteil des Spannhebels 2 ist. Das Basisgehäuse 2 ist zur Befestigung an einem anderen Gehäuse, z.B. einem Kurbelgehäuse oder einem Steuergehäuse eines Verbrennungskolbenmotors mit einer Zentralbohrung 10 versehen, durch die beispielsweise eine Befestigungsschraube hindurchführbar ist.

Erfindungsgemäß ist eine zwischen dem Spannhebel 2 und dem Basisgehäuse 4 wirksam angeordneten Torsionsfeder 11 als eine im öffnenden Sinn belastbare schenkellose Schraubenfeder 12 mit stumpfen Federenden 13 und 14 ausgebildet. Die Schraubenfeder 12 ist koaxial zu dem Schwenklager 3 angeordnet und steht mit beiden Federenden 13, 14 formschlüssig axial gehäuseseitig mit dem Basisgehäuse 4 und hebelseitig mit dem Spannhebel 2 in Verbindung.

Zur Spannung eines im eingebauten Zustand die Spannrolle 6 teilweise umschlingenden Zugmittels eines Zugmitteltriebs ist der Spannhebel 2 mittels der

Schraubenfeder 12 mit einem Torsionsmoment $M_T$ um die Drehachse 5 des Schwenklagers 3 beaufschlagbar. Das Torsionsmoment $M_T$ wird über das hebelseitige Federende 13 der Schraubenfeder 12 in Form einer tangentialen Federkraft $F_{F\_T}$ über eine axial-radial verlaufende Anschlagfläche 15 eines hebelfesten Mitnehmers 16 in den Spannhebel 2 eingeleitet. Das wirksame Torsionsmoment $M_T$ ergibt sich somit aus der tangentialen Federkraft $F_{F\_T}$ multipliziert mit dem halben Durchmesser $D_F/2$ der Schraubenfeder 12 (also $M_T = F_{F\_T} * D_F/2$).

Dem Torsionsmoment $M_T$ der Schraubenfeder 12 hält die in einer mittleren radialen Kraftangriffsebene 17 der Spannrolle 6 wirksame resultierende Reaktionskraft $F_{Z\_R}$ des Zugmittels auf die Spannrolle 6 multipliziert mit dem effektiven, also rechtwinkligem Abstand $R_{H\_eff}$ der Drehachse 18 der Spannrolle 6 zu der Drehachse 5 des Schwenklagers 3 das Gleichgewicht, so dass für das Momentengleichgewicht die Gleichung $M_T = F_{F-T} * D_F/2 = F_{Z\_R} * R_{H-eff}$ gilt.

Aufgrund ihres axialen Abstandes $L_1$ zu einer mittleren radialen Lagerebene 19 des Schwenklagers 3 hat die resultierende Reaktionskraft $F_{Z-R}$ des Zugmittels auch ein Kippmoment $M_K = F_{Z\_R} * L_1$ um eine gedachte Kippachse 20 zur Folge, die senkrecht zu der Reaktionskraft $F_{F\_T}$ des Zugmittels und der Drehachse 5 des Schwenklagers 3 in der mittleren Lagerebene 19 liegt, welches ohne einen Drehmomentausgleich zu einer hohen lokalen Kantenbelastung der Gleitlagerbuchse 9 und demzufolge zu einem vorzeitigen Verschleiß derselben bzw. der Spannvorrichtung 1 führen würde.

Daher ist der Mitnehmer 16 bezüglich der Drehachse 5 des Schwenklagers 3 umfangsseitig derart angeordnet, dass die Anschlagfläche 15 normal zu der resultierenden Reaktionskraft $F_{Z\_R}$ des Zugmittels auf die Spannrolle 6 ausgerichtet ist, und die Mitte des hebelseitigen Federendes 13 zu der mittleren Lagerebene 19 des Schwenklagers 3 einen derartigen axialen Abstand $L_2$ aufweist, dass das durch die tangentiale Federkraft $F_{F\_T}$ um die Kippachse 20 auf den Spannhebel 2 ausgeübte Kippmoment $M_K = F_{F\_T} * L_2$ mit entgegengesetzter Drehrichtung dem Kippmoment $M_K = F_{Z\_R} * L_1$ der Reaktionskraft $F_{Z\_R}$ des Zugmittels auf den Spannhebel 2 entspricht, wodurch eine momentenfreie Belastung der Gleitlagerbuchse 6 erzielt wird. Demzufolge gilt das Momentengleichgewicht $M_K = F_{Z\_R} * L_1 = F_{F\_T} * L_2$.

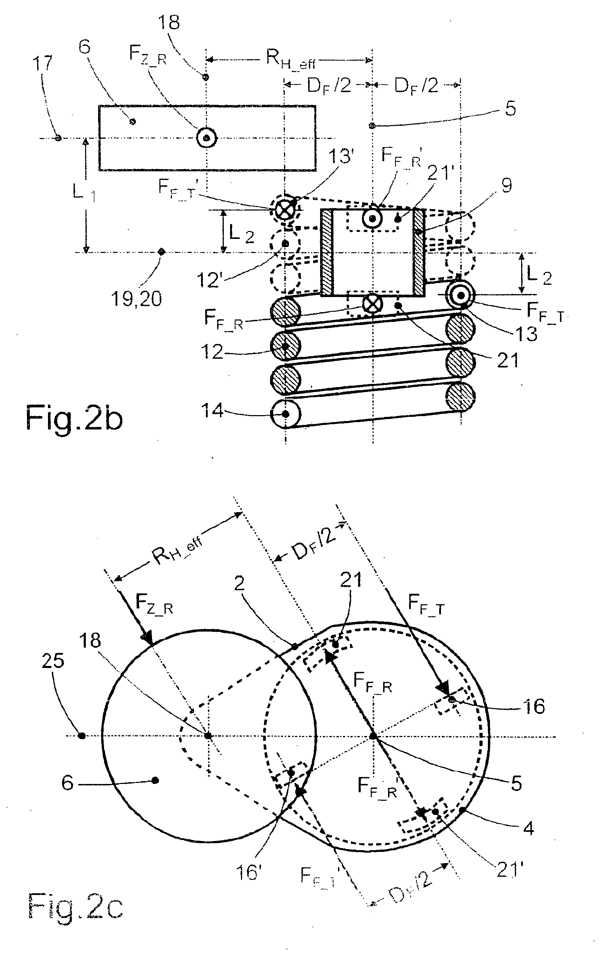

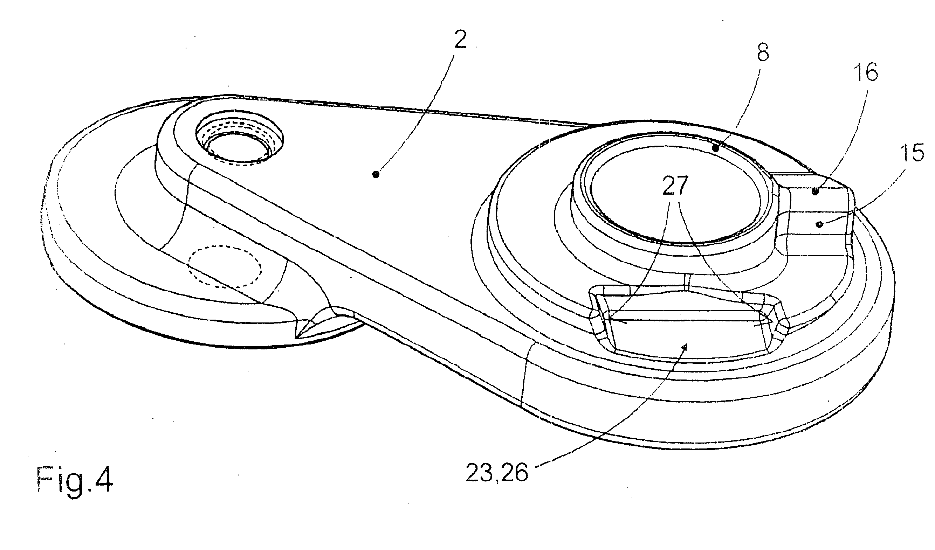

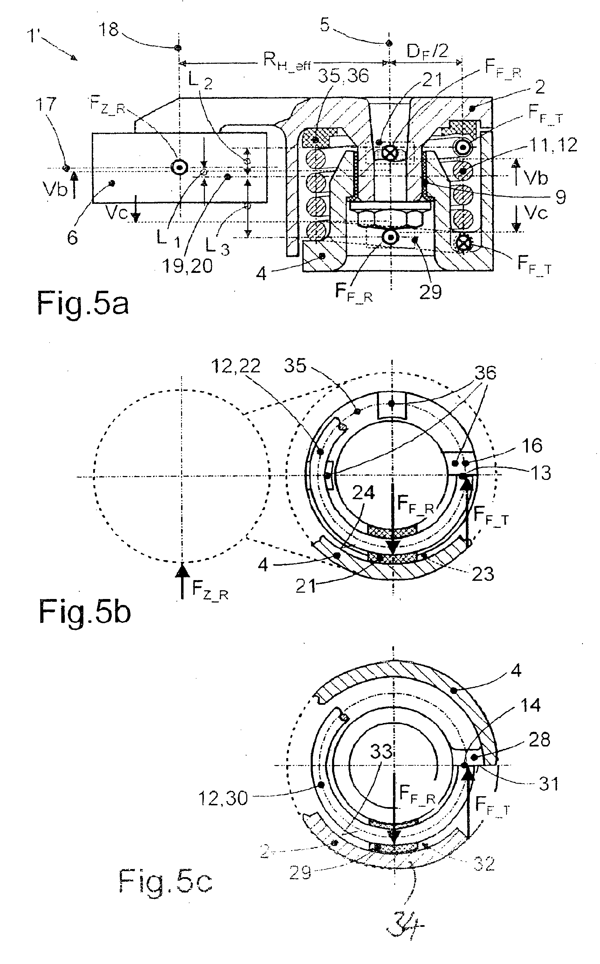

Die hebelseitige Abstützung der Reaktionskraft $F_{F\_R}$ des Spannhebels 2 auf die tangentiale Federkraft $F_{F\_T}$ der Schraubenfeder 12 erfolgt ohne eine Beeinflussung des Momentengleichgewichts des Spannhebels 2 gegenüber dem Basisgehäuse 4 über einen Gleitschuh 21. Wie insbesondere Fig. 2b und Fig. 2c zeigen, ist der Gleitschuh 21 um die Drehachse 5 des Schwenklagers 3 bezüglich der äußeren hebelseitigen Windung 22 der Schraubenfeder 12 von der Anschlagfläche 15 des Mitnehmers 16 aus gesehen um etwa 90° zurückversetzt angeordnet, liegt dabei radial innen an der äußeren hebelseitigen Windung 22 der Schraubenfeder 12 an, ist in einer Radialführung 23 des Spannhebels 2 radialbeweglich geführt, und liegt radial außen mit einer Reibungsfläche an einer zylindrischen Innenwand 24 des Basisgehäuses 4 an (Fig. 4, Fig. 5b). Durch die Abstützung der Reaktionskraft $F_{F\_R}$ des Spannhebels 2 über den Gleitschuh 21 wird eine der tangentialen Federkraft $F_{F\_T}$ der Schraubenfeder 12 proportionale Reibungsdämpfung einer Schwenkbewegung des Spannhebels 2 gegenüber dem Bäsisgehäuse 4 bewirkt.

Aufgrund der gültigen Momenten- und Kräftebeziehungen mit $M_T = F_{F\_T} * D_F/2 = F_{Z-R} * R_{H\_eff}$ beziehungsweise $F_{F\_T} / F_{Z-R} = R_{H\_eff} / D_F/2$ und $M_K = F_{Z\_R} * L_1 = F_{F-T} * L_2$ beziehungsweise $F_{F\_T} / F_{Z-R} = L_1 / L_2$ kann der zum Momentenausgleich erforderliche axiale Abstand $L_2$ des hebelseitigen Federendes 13 der Schraubenfeder 12 zu der mittleren Lagerebene 19 des Schwenklagers 3 bei sonst gegebenen Abmessungen nach der Gleichung

$$L_2 = L_1 * D_F / (2 \, R_{H\_eff})$$

bestimmt werden.

Zur Verdeutlichung der Hebelverhältnisse ist die Spannvorrichtung 1 gemäß Fig. 1 in stark vereinfachter schematischer Form in Fig. 2a in einer Axialansicht mit Blickrichtung von dem Spannhebel 2 auf das Basisgehäuse 4 und in Fig. 2b in einer Fig. 1 entsprechenden radialen Seitenansicht abgebildet. Darin sind die Schraubenfeder 12, der Mitnehmer 16 und der Gleitschuh 21 sowie die wirksamen Kräfte $F_{F\_T}$, $F_{Z\_R}$, $F_{F\_R}$ entsprechend der Darstellung gemäß Fig. 1 für eine Anordnung des hebelseitigen Federendes 12 auf der bezüglich der mittleren Lagerebene 19 des Schwenklagers 3 bzw. der Gleitlagerbuchse 9 der Spannrolle 6 axial gegenüberliegenden Seite abgebildet. Demzufolge ist der Mitnehmer 16 zur Erzielung des gewünschten Torsionsmomentes $M_T$ und des ausgleichenden Kippmomentes $M_K$ bezüglich der Drehachse 5 des Schwenklagers 3 der Spannrolle 6 radial gegenüberliegend und der Gleitschuh 21 gegenüber dem Mitnehmer 16 im Gegenuhrzeigersinn um 90° versetzt angeordnet.

Zusätzlich ist in Fig. 2a und Fig. 2b jedoch auch die Anordnung der Schraubenfeder 12', des Mitnehmers 16' und des Gleitschuhs 21' sowie die wirksamen Kräfte $F_{F\_T}'$, $F_{F\_R}'$ dargestellt, die sich ergeben, wenn das hebelseitige Federende 13' auf der bezüglich der mittleren Lagerebene 19 des Schwenklagers 3 bzw. der Gleitlagerbuchse 9 axial gleichen Seite wie die Spannrolle 6 liegt. In diesem Fall ist der Mitnehmer 16' zur Erzielung des gewünschten Torsionsmomentes $M_T$ und des ausgleichenden Kippmomentes $M_K$ bezüglich der Drehachse 5 des Schwenklagers 3 radial auf derselben Seite wie die Spannrolle 6 und der Gleitschuh 21' entsprechend gegenüber dem Mitnehmer 16' im Gegenuhrzeigersinn um 90° versetzt angeordnet.

Bislang wurde zur Vereinfachung der Darstellung davon ausgegangen, dass das Zugmittel in der Arbeitsstellung des Spannhebels 2 die Spannrolle 6 in idealer Weise derart umschlingt, dass die Belastung des Zugmittels auf die Spannrolle 6 und den Spannhebel 2, also die resultierende Reaktionskraft $F_{Z\_R}$, genau senkrecht zu der geometrischen Achse 25 des Spannhebels 2 ausgerichtet ist, durch welche die Drehachse 5 des Schwenklagers 3 mit der Drehachse 18 der Spannrolle 6 verbunden ist. In diesem Fall ist der effektive radiale Abstand $R_{H\_eff}$ der Reaktionskraft $F_{Z\_R}$ zur Drehachse 5 des Schwenklagers 3 identisch mit dem geometrischen Abstand der Drehachse 18 der Spannrolle 6 zu der Drehachse 5 des Schwenklagers 3.

Derartige Einbauverhältnisse sind aber in der Praxis häufig nicht gegeben, so dass die Reaktionskraft $F_{Z\_R}$ zumeist gegenüber der Normalen auf der geometrischen Achse 25 des Spannhebels 2 um die Drehachse 18 der Spannrolle 6 zumindest geringfügig geneigt ist. Dies ist beispielhaft in Fig. 2c in einer auf Fig. 2a basierenden Axialansicht in Form einer um etwa 30° zur Normalen geneigt angreifenden Reaktionskraft $F_{Z\_R}$ dargestellt. Entsprechend müssen dann auch der Mitnehmer 16 bzw. 16' und der Gleitschuh 21 bzw. 21' um die Drehachse 5 des Schwenklagers 3 verdreht angeordnet sein, damit der Ausgleich des durch die Reaktionskraft $F_{Z\_R}$ erzeugten Kippmomentes $M_K$ durch die tangentiale Federkraft $F_{F\_T}$ bzw. $F_{F\_T}'$ in der vorgesehenen Weise gegeben ist.

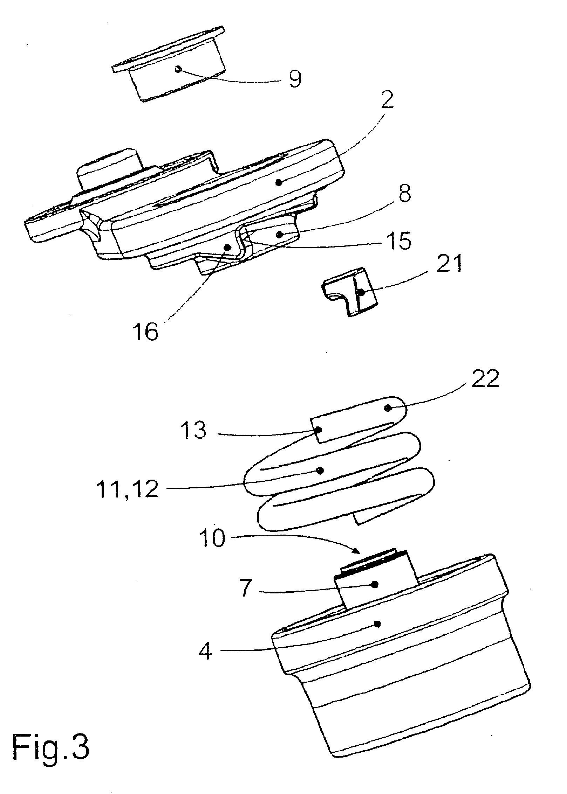

Die wichtigsten Bauteile der erfindungsgemäßen Spannvorrichtung 1 sind beispielhaft in Fig. 3 in einer Explosionsdarstellung abgebildet. Der Spannhebel 2, der hier ohne die Spannrolle 6 dargestellt ist, umfasst bei dieser Ausführung einstückig neben der Lagernabe 8 auch den Mitnehmer 16 mit der Anschlagfläche 15, an der im montierten Zustand das hebelseitige Federende 13 der Schraubenfeder 12 anliegt. Der mit der Zentralbohrung 10 versehene Lagerbolzen 7 ist starr mit dem topfförmigen Basisgehäuse 4 verbunden.

Eine praktische Ausführungsform des Spannhebels 2 ist in Fig. 4 in einer perspektivischen Schrägansicht auf die dem Basisgehäuse 4 zugewandte Seite abgebildet. Neben der Lagernabe 8 und dem Mitnehmer 16 mit der Anschlagfläche 15 ist darin besonders eine mögliche Ausgestaltung der für den Gleitschuh 21 vorgesehenen Radialführung 23 erkennbar, die hier als eine axiale Ausnehmung 26 mit umfangsseitig angeordneten radialen Führungsflächen 27 ausgebildet ist.

Eine weitergebildete Ausführungsform der erfindungsgemäßen Spannvorrichtung 1' ist in Fig. 5a in einer Radialansicht eines Längsmittelschnitts, in Fig. 5b in einer axialen Schnittansicht Vb - Vb gemäß Fig. 5a mit Blickrichtung von dem Basisgehäuse 4 auf den Spannhebel 2, und in einer axialen Schnittansicht Vc - Vc gemäß Fig. 5a mit Blickrichtung von dem Spannhebel 2 auf das Basisgehäuse 4 dargestellt. In einer Inline-Anordnung bzw. U-Anordnung ist die Spannrolle 6 auf der dem Basisgehäuse 4 axial zugewandten Innenseite angeordnet. Die resultierende Reaktionskraft $F_{Z\_R}$ des Zugmittels auf die Spannrolle 6 und die tangentiale Federkraft $F_{F\_T}$ der Schraubenfeder 12 greifen auf der von dem Basisgehäuse 4 axial abgewandten Seite der mittleren Lagerebene 19 des Schwenklagers 3 mit gleicher Wirkungsrichtung bezüglich der Kippachse 20 mit dem Hebelarm $L_1$ bzw. $L_2$ an. Daraus ergibt sich das wirksame Kippmoment $M_K = F_{Z\_R} L_1 + F_{F\_T} * L_2$ um die Kippachse 20.

Zum Ausgleich dieses Kippmomentes $M_K$ wird die Reaktionskraft $F_{F\_R}$ des Basisgehäuses 4 auf die gehäuseseitig von dem gehäuseseitigen Federende 14 über einen Mitnehmer 28 in das Basisgehäuse 4 eingeleiteten tangentialen Federkraft $F_{F\_T}$ über einen zweiten Gleitschuh 29 gegenüber dem Spannhebel 2 abgestützt. Hierzu ist der zweite Gleitschuh 29 um die Drehachse 5 des Schwenklagers 3 bezüglich der äußeren gehäuseseitigen Windung 30 der Schraubenfeder 12 von der Anschlagfläche 31 des Mitnehmers 28 aus um etwa 90° zurückversetzt angeordnet, liegt radial innen an der äußeren gehäuseseitigen Windung 30 der Schraubenfeder 12 an, ist in einer Radialführung 32 des Basisgehäuses 4 radialbeweglich geführt, und liegt radial außen mit einer Reibungsfläche an einer zylindrischen Innenwand 33 einer mit dem Spannhebel 2 verbundenen abschnittsweise zylindrischen Schale 34 an.

Durch die Abstützung der Reaktionskraft $F_{F\_R}$ des Basisgehäuses 4 über den zweiten Gleitschuh 29 wird mit dem Hebelarm $L_3$ ein ausgleichendes Moment $M_K = F_{F\_R} * L_3$ um die Kippachse 20 erzeugt, das dem Moment $M_K$ der Reaktionskraft $F_{Z\_R}$ und der hebelseitig in den Spannhebel 2 eingeleiteten Federkraft $F_{F\_T}$ das Gleichgewicht hält und somit eine momentenfreie Belastung der Gleitlagerbuchse 9 bewirkt ($M_K = F_{Z\_R} * L_1 + F_{F\_T} * L_2 = F_{F\_R} * L_3$). Da die tangentiale Federkraft $F_{F\_T}$ und die radiale Stützkraft $F_{F\_R}$ betragsmäßig identisch sind gilt zudem $F_{Z\_R} * L_1 = F_{F\_T} * (L_3 - L_2)$ bzw. $F_{F\_T} / F_{Z\_R} = L_1 / (L_3 - L_2)$.

Demzufolge kann der zum Momentenausgleich erforderliche axiale Abstand $L_3$ des gehäuseseitigen Federendes 14 der Schraubenfeder 12 zu der mittleren Lagerebene 19 des Schwenklagers 3 bei sonst gegebenen Abmessungen mit der ebenfalls gültigen Beziehung $M_T = F_{F\_T} * D_F/2 = F_{Z\_R} * R_{H\_eff}$ beziehungsweise $F_{F\_T} / F_{Z\_R} = R_{H\_eff} / D_F/2$ nach der Gleichung $L_3 = L_1 * D_F / (2 R_{H-eff}) + L_2$ bestimmt werden.

Durch die Abstützung der Reaktionskraft $F_{F\_R}$ des Spannhebels 2 über den hebelseitigen ersten Gleitschuh 21 und über den gehäuseseitigen zweiten Gleitschuh 29 wird eine besonders starke Reibungsdämpfung einer Schwenkbewegung des Spannhebels 2 gegenüber dem Basisgehäuse 4 bewirkt, die der tangentialen Federkraft $F_{F\_T}$ der Schraubenfeder 12 proportional ist.

In den Darstellungen gemäß Fig. 5a bis Fig. 5c ist beispielhaft zwischen der äußeren hebelseitigen Windung 22 der Schraubenfeder 12 und dem Spannhebel 2 ein Lagerring 35 aus einem widerstandsfähigen und reibungsarmen Kunststoff angeordnet, der gegenüber dem Spannhebel 2 formschlüssig gegen ein Verdrehen gesichert ist und über seinen Umfang verteilt federseitig angeordnete axiale Erhebungen 36 aufweist. Hierdurch ist die äußere hebelseitige Windung 22 der Schraubenfeder 12 punktförmig axial abgestützt und kann sich beim Ein- und Ausfedern der Schraubenfeder 12 weitgehend unbehindert radial bewegen. Bei ausreichender Flexibilität des Lagerrings 35 kann auch der hebelseitigen Gleitschuh 21 einstückig in den Lagerring 35 integriert sein.

Bezugszeichen liste

| | |
|---|---|
| 1 | Spannvorrichtung |
| 1' | Spannvorrichtung |
| 2 | Spannhebel |
| 3 | Schwenklager |
| 4 | Basisgehäuse |
| 5 | Drehachse (von 2, 3) |
| 6 | Spannrolle |
| 7 | Lagerbolzen |
| 8 | Lagernabe |
| 9 | Gleitlagerbuchse |
| 10 | Zentralbohrung |
| 11 | Torsionsfeder |
| 12 | Schraubenfeder |
| 12' | Schraubenfeder |
| 13 | (hebelseitiges) Federende |
| 13' | (hebelseitiges) Federende |
| 14 | (gehäuseseitiges) Federende |
| 15 | Anschlagfläche (von 16) |
| 16 | Mitnehmer |
| 16' | Mitnehmer |
| 17 | Mittlere Kraftangriffsebene (von 6) |
| 18 | Drehachse (von 6) |
| 19 | Mittlere Lagerebene |
| 20 | Kippachse |
| 21 | (erster) Gleitschuh |
| 21' | Gleitschuh |
| 22 | Äußere hebelseitige Windung (von 12) |
| 23 | Radialführung |
| 24 | Innenwand |
| 25 | Geometrische Achse (von 2) |
| 26 | Ausnehmung |
| 27 | Führungsfläche |
| 28 | Mitnehmer |
| 29 | (zweiter) Gleitschuh |

| | |
|---|---|
| 30 | Äußere gehäuseseitige Windung |
| 31 | Anschlagfläche (von 28) |
| 32 | Radialführung |
| 33 | Innenwand |
| 34 | Schale |
| 35 | Lagerring |
| 36 | Axiale Erhebung |
| $D_F$ | Durchmesser (von 12) |
| $F_{F\_R}$ | (radiale) Reaktionskraft (von 2, 12) |
| $F_{F\_R}'$ | (radiale) Reaktionskraft (von 2,12) |
| $F_{F\_T}$ | Tangentiale Federkraft (von 12) |
| $F_{F\_T}'$ | Tangentiale Federkraft (von 12) |
| $F_{Z\_R}$ | (radiale) Reaktionskraft |
| $L_1$ | Axialer Abstand |
| $L_2$ | Axialer Abstand |
| $L_3$ | Axialer Abstand |
| $M_K$ | Kippmoment (um 20) |
| $M_T$ | Torsionsmoment (um 5) |
| $R_{H-eff}$ | Effektiver radialer Abstand |

**Patentansprüche**

1. Spannvorrichtung eines Zugmitteltriebs, mit einem über ein Schwenklager (3) drehbar an einem Basisgehäuse (4) gelagerten und radial beabstandet von der Drehachse (5) des Schwenklagers (3) mit einer drehbaren Spannrolle (6) versehenen Spannhebel (2), der mittels einer als Schraubenfeder (12) ausgebildeten, koaxial zu dem Schwenklager (3) angeordneten, und an beiden Federenden (13, 14) gehäuseseitig mit dem Basisgehäuse (4) und hebelseitig mit dem Spannhebel (2) in Verbindung stehenden Torsionsfeder (11) mit einem Torsionsmoment ($M_T$) um die Drehachse (5) des Schwenklagers (3) beaufschlagbar ist, wobei das Schwenklager (3) einen Lagerbolzen (7), eine Lagernabe (8) und mindestens eine zwischen dem Lagerbolzen (7) und der Lagernabe (8) angeordnete Gleitlagerbuchse (9) umfasst, und wobei eine mittlere radiale Kraftangriffsebene (17) der Spannrolle (6) zu einer mittleren radialen Lagerebene (19) des Schwenklagers (3) axial beabstandet ist,
**dadurch gekennzeichnet, dass** die Torsionsfeder (11) als eine im öffnenden Sinn belastbare schenkellose Schraubenfeder (12) mit stumpfen Federenden (13, 14) ausgebildet ist, deren hebelseitiges Federende (13) an einer axial-radial ausgerichteten Anschlagfläche (15) eines mit dem Spannhebel (2) verbundenen Mitnehmers (16) anliegt, wobei der Mitnehmer bezüglich der Drehachse (5) des Schwenklagers (3) umfangsseitig derart angeordnet ist, dass die Anschlagfläche (15) normal zu einer resultierenden Reaktionskraft ($F_{Z\_R}$) eines Zugmittels auf die Spannrolle (6) ausgerichtet ist, wobei die Abstützung einer Reaktionskraft ($F_{F\_R}$) des Spannhebels (2) auf die Schraubenfeder (12) gegenüber dem Basisgehäuse (4) erfolgt, und wobei die Mitte des hebelseitigen Federendes (13) zu der mittleren Lagerebene (19) des Schwenklagers (3) axial derart beabstandet ist, dass sich die Kippmomente ($M_K$) einer über die Anschlagfläche (15) auf den Spannhebel (2) wirksamen tangentialen Federkraft ($F_{F\_T}$) der Schraubenfeder (12) und der über die Spannrolle (6) auf den Spannhebel (2) wirksamen resultierenden Reaktionskraft ($F_{Z\_R}$) des Zugmittels um eine gedachte, senkrecht zu der Federkraft ($F_{F\_T}$) und der Reaktionskraft ($F_{Z\_R}$) die Drehachse (5) des Schwenklagers (3) in der mittleren Lagerebene (19) senkrecht kreuzende Kippachse (20) gegenseitig aufheben.

2.  Spannvorrichtung nach Anspruch 1, **dadurch gekennzeichnet, dass** der Mitnehmer (16) bei einer bezüglich der mittleren Lagerebene (19) des Schwenklagers (3) axial gegenüberliegenden Anordnung der mittleren Kraftangriffsebene (17) der Spannrolle (6) und der Mitte des hebelseitigen Federendes (13) der Schraubenfeder (12) in einem der Spannrolle (6) radial abgewandten Sektor des Spannhebels (2) angeordnet ist.

3.  Spannvorrichtung nach Anspruch 1, **dadurch gekennzeichnet, dass** der Mitnehmer (16') bei einer bezüglich der mittleren Lagerebene (19) des Schwenklagers (3) axial gleichseitigen Anordnung der mittleren Kraftangriffsebene (17) der Spannrolle (6) und der Mitte des hebelseitigen Federendes (13) der Schraubenfeder (12) in einem der Spannrolle radial zugewandten Sektor des Spannhebels (2) angeordnet ist.

4.  Spannvorrichtung nach einem der Ansprüche 1 bis 3, **dadurch gekennzeichnet, dass** die hebelseitige Abstützung der Reaktionskraft ($F_{F\_R}$) des Spannhebels (2) auf die Schraubenfeder (12) über einen Gleitschuh (21) erfolgt, der um die Drehachse (5) des Schwenklagers (3) bezüglich der äußeren hebelseitigen Windung (22) der Schraubenfeder (12) von der Anschlagfläche (15) des Mitnehmers (16) aus um etwa 90° zurückversetzt angeordnet ist, radial innen an der äußeren hebelseitigen Windung (22) der Schraubenfeder (12) anliegt, in einer Radialführung (23) des Spannhebels (2) radialbeweglich geführt ist, und radial außen mit einer Reibungsfläche an einer zylindrischen Innenwand (24) des Basisgehäuses (4) anliegt.

5.  Spannvorrichtung nach zumindest einem der Ansprüche 1 bis 4, **dadurch gekennzeichnet, dass** zwischen der äußeren hebelseitigen Windung (22) der Schraubenfeder (12) und dem Spannhebel (2) ein Lagerring (35) angeordnet ist, der gegenüber dem Spannhebel (2) formschlüssig gegen ein Verdrehen gesichert ist und aus einem widerstandsfähigen und reibungsarmen Kunststoff besteht.

6.  Spannvorrichtung nach Anspruch 5, **dadurch gekennzeichnet, dass** der Lagerring (35) über seinen Umfang verteilt federseitig angeordnete axiale Erhebungen (36) zur punktförmigen axialen Abstützung der äußeren hebelseitigen Windung (22) der Schraubenfeder (12) aufweist.

7.  Spannvorrichtung nach einem der Ansprüche 3 bis 6, **dadurch gekennzeichnet, dass** der Gleitschuh (21) einstückig mit dem Lagerring (35) verbunden ist.

8.  Spannvorrichtung nach einem der Ansprüche 1 bis 7, **dadurch gekennzeichnet, dass** der Mitnehmer (16) einstückig mit dem Spannhebel (2) verbunden ist.

9.  Spannvorrichtung nach zumindest einem der Ansprüche 3 bis 7, **dadurch gekennzeichnet, dass** der Mitnehmer (16) einstückig mit dem Lagerring (35) verbunden ist.

10. Spannvorrichtung nach zumindest einem der Ansprüche 1 bis 9, **dadurch gekennzeichnet, dass** die Schraubenfeder (12) kegelförmig ausgebildet ist.

11. Spannvorrichtung nach zumindest einem der Ansprüche 1 bis 10, **dadurch gekennzeichnet, dass** das gehäuseseitige Federende (14) der Schraubenfeder (12) an einer bezüglich der Drehachse (5) des Schwenklagers (3) axial-radial ausgerichteten Anschlagfläche (31) eines mit dem Basisgehäuse (4) verbundenen Mitnehmers (28) anliegt, wobei der Mitnehmer (28) umfangsseitig derart angeordnet ist, dass die Anschlagfläche (31) normal zu der mittleren resultierenden Reaktionskraft ($F_{Z\_R}$) des Zugmittels auf die Spannrolle (6) ausgerichtet ist, und dass eine hebelseitige Abstützung der Reaktionskraft ($F_{F\_R}$) des Basisgehäuses (4) auf die Schraubenfeder (12) über einen zweiten Gleitschuh (29) erfolgt, der um die Drehachse (5) des Schwenklagers (3) bezüglich der äußeren gehäuseseitigen Windung (30) der Schraubenfeder (12) von der Anschlagfläche (31) des Mitnehmers (28) aus um etwa 90° zurückversetzt angeordnet ist, radial innen an der äußeren gehäuseseitigen Windung (30) der Schraubenfeder (12) anliegt, in einer Radialführung (32) des Basisgehäuses (4) radialbeweglich geführt ist, und radial außen mit einer Reibungsfläche an einer zylindrischen Innenwand (33) des Spannhebels (2) anliegt, wobei die Mitte der Reibfläche des Gleitschuhs (29) axial derart zu der mittleren Lagerebene (19) des Schwenklagers (3) beabstandet ist, dass sich die Kippmomente ($M_K$) der über die Spannrolle (6) auf den Spannhebel (2) wirksamen resultierenden Reaktionskraft ($F_{Z\_R}$) des Zugmittels, der hebelseitig über die dortige Anschlagfläche (15) auf den Spannhebel (2) wirksamen Federkraft ($F_{F\_T}$) der Schraubenfeder (12), und der gehäuseseitig über den zweiten Gleitschuh (29) in den Spannhebel (2) eingeleiteten radialen Anpresskraft ($F_{F\_R}$) um die Kippachse (19) gegenseitig aufheben.

## Claims

1. Tensioning device of a traction mechanism drive, having a tensioning lever (2) which is mounted on a base housing (4) so as to be able to rotate via a pivot bearing (3) and, radially spaced apart from the axis of rotation (5) of the pivot bearing (3), is provided with a rotatable tensioning roller (6), which tensioning lever can, by means of a torsional spring (11) which is configured as a helical spring (12), is arranged coaxially with the pivot bearing (3) and is connected at both spring ends (13, 14) at the housing side to the base housing (4) and at the lever side to the tensioning lever (2), be acted on with a torsional moment ($M_T$) about the axis of rotation (5) of the pivot bearing (3), the pivot bearing (3) comprising a bearing journal (7), a bearing hub (8) and at least one plain bearing sleeve (9) arranged between the bearing journal (7) and the bearing hub (8), and a central radial force application plane (17) of the tensioning roller (6) being axially spaced apart from a central radial bearing plane (19) of the pivot bearing (3), **characterized in that** the torsional spring (11) is configured as a legless helical spring (12) which can be loaded in the opening direction and has blunt spring ends (13, 14), the lever-side spring end (13) of said helical spring resting against an axially/radially oriented stop surface (15) of an entrainment member (16) connected to the tensioning lever (2), the entrainment member being arranged at the circumferential side with respect to the axis of rotation (5) of the pivot bearing (3) in such a way that the stop surface (15) is oriented normally to a resulting reaction force ($F_{Z\_R}$) of a traction mechanism onto the tensioning roller (6), a reaction force ($F_{F\_R}$) of the tensioning lever (2) onto the helical spring (12) being supported relative to the base housing (4), and the center of the lever-side spring end (13) being axially spaced apart from the central bearing plane (19) of the pivot bearing (3) in such a way that the tilting moments ($M_K$) of a tangential spring force ($F_{F\_T}$), which acts on the tensioning lever (2) via the stop surface (15), of the helical spring (12) and of the resulting reaction force ($F_{Z\_R}$), which acts on the tensioning lever (2) via the tensioning roller (6), of the traction mechanism cancel one another out about a notional tilt axis (20) which perpendicularly intersects the axis of rotation (5) of the pivot bearing (3) in the central bearing plane (19) perpendicularly to the spring force ($F_{F\_T}$) and the reaction force ($F_{Z\_R}$).

2. Tensioning device according to Claim 1, **characterized in that** the entrainment member (16) is arranged, in the case of an axially opposing arrangement, with respect to the central bearing plane (19) of the pivot bearing (3), of the central force application plane (17) of the tensioning roller (6) and of the center of the lever-side spring end (13) of the helical spring (12), in a sector of the tensioning lever (2) that is radially remote from the tensioning roller (6).

3. Tensioning device according to Claim 1, **characterized in that** the entrainment member (16') is arranged, in the case of an axially same-side arrangement, with respect to the central bearing plane (19) of the pivot bearing (3), of the central force application plane (17) of the tensioning roller (6) and of the center of the lever-side spring end (13) of the helical spring (12), in a sector of the tensioning lever (2) that radially faces the tensioning roller.

4. Tensioning device according to one of Claims 1 to 3, **characterized in that** the reaction force ($F_{F\_R}$) of the tensioning lever (2) onto the helical spring (12) is supported at the lever side via a sliding block (21) which is arranged set back by approximately 90°, from the stop surface (15) of the entrainment member (16), about the axis of rotation (5) of the pivot bearing (3) with respect to the outer lever-side coil (22) of the helical spring (12), rests radially inwardly against the outer lever-side coil (22) of the helical spring (12), is radially movably guided in a radial guide (23) of the tensioning lever (2) and rests radially outwardly with a friction surface against a cylindrical inner wall (24) of the base housing (4).

5. Tensioning device according to at least one of Claims 1 to 4, **characterized in that** a bearing ring (35), which is secured in a form-fitting manner against rotation relative to the tensioning lever (2) and is made of a durable and low-friction plastics material, is arranged between the outer lever-side coil (22) of the helical spring (12) and the tensioning lever (2).

6. Tensioning device according to Claim 5, **characterized in that** the bearing ring (35) has axial elevations (36), arranged at the spring side distributed over the circumference of said bearing ring, for axially supporting the outer lever-side coil (22) of the helical spring (12) in a point-by-point manner.

7. Tensioning device according to one of Claims 3 to 6, **characterized in that** the sliding block (21) is integrally connected to the bearing ring (35).

8. Tensioning device according to one of Claims 1 to 7, **characterized in that** the entrainment member (16) is integrally connected to the tensioning lever (2).

9. Tensioning device according to at least one of Claims 3 to 7, **characterized in that** the entrainment member (16) is integrally connected to the bearing ring (35).

10. Tensioning device according to at least one of Claims 1 to 9, **characterized in that** the helical spring (12) is conical in its configuration.

11. Tensioning device according to at least one of Claims 1 to 10, **characterized in that** the housing-side spring end (14) of the helical spring (12) rests against a stop surface (31), which is oriented axially/radially with respect to the axis of rotation (5) of the pivot bearing (3), of an entrainment member (28) connected to the base housing (4), the entrainment member (28) being arranged at the circumferential side in such a way that the stop surface (31) is oriented normally to the central resulting reaction force ($F_{Z\_R}$) of the traction mechanism onto the tensioning roller (6), and **in that** the reaction force ($F_{F\_R}$) of the base housing (4) onto the helical spring (12) is supported at the lever side via a second sliding block (29) which is arranged set back by approximately 90°, from the stop surface (31) of the entrainment member (28), about the axis of rotation (5) of the pivot bearing (3) with respect to the outer housing-side coil (30) of the helical spring (12), rests radially inwardly against the outer housing-side coil (30) of the helical spring (12), is radially movably guided in a radial guide (32) of the base housing (4) and rests radially outwardly with a friction surface against a cylindrical inner wall (33) of the tensioning lever (2), the center of the friction surface of the sliding block (29) being axially spaced apart from the central bearing plane (19) of the pivot bearing (3) in such a way that the tilting moments ($M_K$) of the resulting reaction force ($F_{Z\_R}$), which acts on the tensioning lever (2) via the tensioning roller (6), of the traction mechanism, of the spring force ($F_{F\_T}$), which acts on the tensioning lever (2) at the lever side via the stop surface (15) there, of the helical spring (12), and of the radial contact force ($F_{F\_R}$), which is introduced into the tensioning lever (2) at the housing side via the second sliding block (29), about the tilt axis (19) cancel one another out.

## Revendications

1. Dispositif de serrage d'un entraînement à moyen de traction, comprenant un levier de serrage (2) monté par le biais d'un palier pivotant (3) de manière rotative sur un boîtier de base (4) et pourvu, à distance radiale de l'axe de rotation (5) du palier pivotant (3), d'un galet-tendeur (6) rotatif, lequel levier de serrage (2) peut être sollicité avec un couple de torsion ($M_T$) autour de l'axe de rotation (5) du palier pivotant (3) au moyen d'un ressort de torsion (11) réalisé sous forme de ressort à boudin (12), disposé coaxialement au palier pivotant (3), et en liaison au niveau des deux extrémités de ressort (13, 14) du côté du boîtier avec le boîtier de base (4) et du côté du levier avec le levier de serrage (2), le palier pivotant (3) comprenant un boulon de palier (7), un moyeu de palier (8), et au moins une douille de palier lisse (9) disposée entre le boulon de palier (7) et le moyeu de palier (8), et un plan d'engagement de force radial central (17) du galet-tendeur (6) étant espacé axialement par rapport à un plan de palier radial central (19) du palier pivotant (3),
**caractérisé en ce que** le ressort de torsion (11) est réalisé sous forme de ressort à boudin (12) sans branches, pouvant être sollicité dans le sens d'une ouverture, avec des extrémités de ressort franches (13, 14), dont l'extrémité de ressort (13) du côté du levier s'applique contre une surface de butée (15) orientée axialement-radialement d'un dispositif d'entraînement (16) connecté au levier de serrage (2), le dispositif d'entraînement étant disposé par rapport à l'axe de rotation (5) du palier pivotant (3) du côté de la périphérie de telle sorte que la surface de butée (15) soit orientée sur le galet-tendeur (6) perpendiculairement à une force de réaction résultante ($F_{Z\_R}$) d'un moyen de traction, le support d'une force de réaction ($F_{F\_R}$) du levier de serrage (2) sur le ressort à boudin (12) s'effectuant par rapport au boîtier de base (4), et le centre de l'extrémité de ressort (13) du côté du levier étant espacé axialement par rapport au plan de palier central (19) du palier pivotant (3) de telle sorte que les couples de basculement ($M_K$) d'une force de ressort ($F_{F\_T}$) tangentielle du ressort à boudin (12) agissant par le biais de la surface de butée (15) sur le levier de serrage (2) et de la force de réaction ($F_{Z\_R}$) résultante du moyen de traction agissant par le biais du galet-tendeur (6) sur le levier de serrage (2) autour d'un axe de basculement (20) imaginaire, perpendiculaire à la force de ressort ($F_{F\_T}$) et à la force de réaction ($F_{Z\_R}$), croisant perpendiculairement l'axe de rotation (5) du palier pivotant (3) dans le plan de palier central (19), s'annulent mutuellement.

2. Dispositif de serrage selon la revendication 1, **caractérisé en ce que** le dispositif d'entraînement (16), dans le cas d'un agencement, opposé axialement par rapport au plan de palier central (19) du palier pivotant (3), du plan d'engagement de force central (17) du galet-tendeur (6) et du centre de l'extrémité de ressort (13) du côté du levier du ressort à boudin (12), est disposé dans un secteur du levier de serrage (2) opposé radicalement au galet-tendeur (6).

3. Dispositif de serrage selon la revendication 1, **caractérisé en ce que** le dispositif d'entraînement (16'), dans le cas d'un agencement, du même côté axialement par rapport au plan de palier central (19) du palier pivotant (3), du plan d'engagement de force central (17) du galet-tendeur (6) et du centre de l'extrémité de ressort (13) du côté du levier du ressort à boudin (12), est disposé dans un secteur du levier de serrage (2) tourné radialement vers le galet-tendeur (6).

4. Dispositif de serrage selon l'une quelconque des revendications 1 à 3, **caractérisé en ce que** le support du côté du levier de la force de réaction ($F_{F\_R}$) du levier de serrage (2) sur le ressort à boudin (12) a lieu par le biais d'un patin coulissant (21), qui est disposé en retrait d'environ 90° depuis la surface de butée (15) du dispositif d'entraînement (16) autour de l'axe de rotation (5) du palier pivotant (3) par rapport à l'enroulement extérieur (22) du côté du levier du ressort à boudin (12), qui s'applique radialement à l'intérieur contre l'enroulement extérieur (22) du côté du levier du ressort à boudin (12), est guidé dans un guidage radial (23) du levier de serrage (2) de manière déplaçable radialement, et s'applique radialement à l'extérieur avec une surface de frottement contre une paroi interne cylindrique (24) du boîtier de base (4).

5. Dispositif de serrage selon au moins l'une quelconque des revendications 1 à 4, **caractérisé en ce qu'**entre l'enroulement extérieur (22) du côté du levier du ressort à boudin (12) et le levier de serrage (2) est disposée une bague de palier (35) qui est fixée en rotation par engagement positif par rapport au levier de serrage (2) et qui se compose d'un plastique résistant et à faible frottement.

6. Dispositif de serrage selon la revendication 5, **caractérisé en ce que** la bague de palier (35) présente, répartis sur sa périphérie, des rehaussements axiaux (36) disposés du côté du ressort, pour le support axial ponctuel de l'enroulement extérieur (22) du côté du levier du ressort à boudin (12).

7. Dispositif de serrage selon l'une quelconque des revendications 3 à 6, **caractérisé en ce que** le patin coulissant (21) est connecté d'une seule pièce à la bague de palier (35).

8. Dispositif de serrage selon l'une quelconque des revendications 1 à 7, **caractérisé en ce que** le dispositif d'entraînement (16) est connecté d'une seule pièce au levier de serrage (2).

9. Dispositif de serrage selon au moins l'une quelconque des revendications 3 à 7, **caractérisé en ce que** le dispositif d'entraînement (16) est connecté d'une seule pièce à la bague de palier (35).

10. Dispositif de serrage selon au moins l'une quelconque des revendications 1 à 9, **caractérisé en ce que** le ressort à boudin (12) est réalisé sous forme conique.

11. Dispositif de serrage selon au moins l'une quelconque des revendications 1 à 10, **caractérisé en ce que** l'extrémité de ressort (14) du côté du boîtier du ressort à boudin (12) s'applique contre une surface de butée (31) orientée axialement-radialement d'un dispositif d'entraînement (28) connecté au boîtier de base (4), par rapport à l'axe de rotation (5) du palier pivotant (3), le dispositif d'entraînement (28) étant disposé du côté de la périphérie de telle sorte que la surface de butée (31) soit orientée sur le galet-tendeur (6) perpendiculairement à la force de réaction résultante centrale ($F_{Z\_R}$) du moyen de traction, et **en ce qu'**un support du côté du levier de la force de réaction ($F_{F\_R}$) du boîtier de base (4) sur le ressort à boudin (12) a lieu par le biais d'un deuxième patin coulissant (29), qui est disposé de manière décalée en retrait d'environ 90° depuis la surface de butée (31) du dispositif d'entraînement (28) autour de l'axe de rotation (5) du palier pivotant (3) par rapport à l'enroulement extérieur (30) du côté du boîtier du ressort à boudin (12), s'applique radialement à l'intérieur contre l'enroulement extérieur (30) du côté du boîtier du ressort à boudin (12), est guidé de manière déplaçable radialement dans un guidage radial (32) du boîtier de base (4), et s'applique radialement à l'extérieur avec une surface de friction contre une paroi intérieure cylindrique (33) du levier de serrage (2), le centre de la surface de friction du patin coulissant (29) étant espacé axialement par rapport au plan de palier central (19) du palier pivotant (3) de telle sorte que les couples de basculement ($M_K$) de la force de réaction ($F_{Z\_R}$) résultante du moyen de traction agissant par le biais du galet-tendeur (6) sur le levier de serrage (2), de la force de ressort ($F_{F\_T}$) du ressort à boudin (12) agissant du côté du levier par le biais de la surface de butée (15) s'y trouvant, sur le levier de serrage (2) et de la force de pressage radiale ($F_{F\_R}$) introduite du côté du boîtier par le biais du deuxième patin coulissant (29) dans le levier de serrage (2), autour de l'axe de basculement (19), s'annulent mutuellement.

Fig.1

Fig.2a

Fig.2b

Fig.2c

Fig.3

Fig.4

**Fig.5a**

**Fig.5b**

**Fig.5c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4220879 A1
- EP 0780597 B1
- DE 60105759 T2
- WO 0151828 A1